(19) **Europäisches Patentamt / European Patent Office / Office européen des brevets**

(11) **EP 3 543 890 B1**

(12) **FASCICULE DE BREVET EUROPEEN**

(45) Date de publication et mention
de la délivrance du brevet:
**09.06.2021 Bulletin 2021/23**

(51) Int Cl.:
**G06F 21/62** (2013.01)

(21) Numéro de dépôt: **19164174.5**

(22) Date de dépôt: **20.03.2019**

(54) **PROCÉDÉS ET SYSTÈME DE GESTION DE DONNÉES PERMETTANT UN CONTRÔLE TEMPOREL DES DONNÉES**

DATENVERWALTUNGSVERFAHREN UND -SYSTEM, DIE EINE ZEITLICHE ÜBERWACHUNG DER DATEN ERMÖGLICHEN

METHODS AND SYSTEM FOR MANAGING DATA ALLOWING TIME CONTROL OF THE DATA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2018 FR 1852474**

(43) Date de publication de la demande:
**25.09.2019 Bulletin 2019/39**

(73) Titulaire: **Sagemcom Energy & Telecom SAS 92500 Rueil-Malmaison (FR)**

(72) Inventeurs:
• LECAPPON, Jean-Paul
92500 Rueil Malmaison (FR)
• ROUVIERE, Olivier
92500 Rueil Malmaison (FR)

(74) Mandataire: **Cabinet Le Guen Maillet 3, impasse de la Vigie CS 71840 35418 Saint-Malo Cedex (FR)**

(56) Documents cités:
**WO-A1-2017/131788    US-A1- 2017 206 372**

**Description**

La présente invention concerne le domaine des systèmes de gestion de données. L'invention concerne plus particulièrement un système de gestion de données permettant un contrôle temporel de l'accès aux données.

Un système de gestion de données, ou, de façon plus complète, système de gestion de base de données (ou DBMS pour « *DataBase Management System* » en anglais) est un système destiné à enregistrer et, ultérieurement, à partager des données dans une base de données, en garantissant la qualité, la pérennité et la confidentialité des données. Un système de gestion de données permet ainsi d'enregistrer, de retrouver (ou lire), de modifier, de trier, de transformer ou d'imprimer les données de la base de données. Un système de gestion de données prend communément la forme d'un logiciel, ou programme d'ordinateur, installé sur un ou plusieurs serveurs informatiques (ci-après serveurs), ainsi que possiblement sur une pluralité de dispositifs électroniques dits « clients ».

Dans un système de gestion de données, certaines données peuvent nécessiter d'avoir une durée de vie limitée. C'est-à-dire que passé une certaine date ou un certain délai, le système de gestion de données doit pouvoir garantir que ces données ne sont plus accessibles, par quelque moyen que ce soit. Le besoin d'une durée de vie limitée est généralement lié à une obligation légale d'une durée maximale de conservation de certaines données, mais peut aussi être lié à des obligations contractuelles.

Classiquement, le respect de l'obligation d'une durée de vie limitée des données conservées dans un système de gestion de données est obtenu par un effacement des données concernées passé le terme de la durée de vie de ces données. Bien souvent, l'effacement des données concernées dans les bases de données ne pose pas de problème. Le traitement des éventuelles sauvegardes des bases de données est lui beaucoup plus problématique. Il faudrait en effet idéalement alors restaurer toutes les sauvegardes déjà effectuées, procéder à l'effacement des données devant être effacées afin de garantir qu'elles ne pourront pas être restaurées par le futur, et ensuite régénérer toutes les sauvegardes. Ce procédé est très complexe à mettre en œuvre, et est très rarement mis en œuvre. Dans la pratique, il est bien souvent constaté que l'effacement de données à durée de vie limitée n'est effectif que lorsque le procédé de sauvegarde commence à réécrire sur des anciennes sauvegardes, effaçant de fait les anciennes sauvegardes. Pour des procédés de sauvegardes utilisant des supports physiques non réinscriptibles, seul une destruction physique des anciennes sauvegardes pourrait permettre de garantir l'inaccessibilité des données à effacer. Mais bien souvent, détruire une ancienne sauvegarde va à l'encontre même du principe de la sauvegarde.

Le document US 2017/206372 A1, décrit l'enregistrement sécurisé de données dans une base de données. Le document WO 2017/131788 A1 décrit l'enregistrement de données encryptées par des clés cryptographiques de durée de vie limitée.

Il n'est pas aujourd'hui possible de garantir pratiquement l'inaccessibilité de données à durée de vie limitée enregistrées dans un système de gestion de données régulièrement sauvegardé.

Il est à noter qu'une problématique identique existe lorsqu'un effacement des données est demandé par un propriétaire de ces données. L'effacement doit aussi garantir qu'une éventuelle restauration d'une sauvegarde passée ne restaure par la même occasion les données effacées.

Il est donc nécessaire de proposer un procédé permettant de pallier ces inconvénients.

L'invention concerne un procédé d'enregistrement de données pour un contrôle temporel d'un accès à des données d'un système de gestion de données comprenant un serveur, le procédé étant exécuté par le serveur, le serveur comprenant une liste indexée de clefs de chiffrement, chaque index étant associé à une clef de chiffrement unique, chaque clef de chiffrement étant associée à une même durée de validité prédéfinie, un index dit courant étant initialement prédéterminé, le procédé comprenant les étapes suivantes :

- recevoir un message comprenant des données à enregistrer dans le système de gestion de données, ainsi qu'une information concernant un délai de conservation souhaité de ces données,
- déterminer un index de chiffrement, en fonction du délai de conservation souhaité, de la durée de validité d'une clef de chiffrement, de l'index courant et de la taille de la liste indexée de clefs de chiffrement,
- chiffrer les données reçues au moyen de la clef de chiffrement associée à l'index de chiffrement,
- déterminer, en fonction des données reçues et de la clef de chiffrement utilisée pour l'étape précédente de chiffrement de ces données, un code d'authentification, et
- enregistrer lesdites données chiffrées en association avec l'index de chiffrement et le code d'authentification,

l'index courant étant mis à jour périodiquement, la période de mise à jour étant égale à la durée de validité d'une clef de chiffrement, la mise à jour comprenant :

- un effacement et remplacement de la clef de chiffrement associée à l'index courant par une nouvelle clef de chiffrement unique,
- une incrémentation circulaire de l'index courant.

Selon un mode de réalisation complémentaire de l'invention, le message comprenant les données à enregistrer comprenant de plus une information dite propriétaire, le procédé comprend une étape antérieure à l'étape de chiffrement :

- déterminer une nouvelle clef de chiffrement en fonction de la clef de chiffrement associée à l'index de chiffrement et de l'information dite propriétaire, et :
- chiffrer les données reçues se fait au moyen de la nouvelle clef de chiffrement,
- déterminer le code d'authentification se faisant en fonction des données reçues et de la nouvelle clef de chiffrement, et
- enregistrer les données chiffrées en association avec l'index de chiffrement et le code d'authentification se fait en outre en association avec l'information dite propriétaire.

L'invention concerne également un procédé d'accès à des données d'un système de gestion de données permettant un contrôle temporel des accès aux données, le système de gestion comprenant un serveur, le procédé étant exécuté par le serveur, le serveur comprenant une liste indexée de clefs de chiffrement, chaque index étant associé à une clef de chiffrement unique, chaque clef de chiffrement étant associée à une même durée de validité prédéfinie, un index dit courant étant initialement prédéterminé, le procédé comprenant les étapes suivantes :

- recevoir une requête d'accès à des données enregistrées dans le système de gestion, les données étant enregistrées chiffrées et en association avec un index de chiffrement et un premier code d'authentification,
- retrouver, en fonction de l'index de chiffrement, la clef de chiffrement de la liste de clefs de chiffrement associée à cet index de chiffrement,
- déchiffrer les données chiffrées au moyen de la clef de chiffrement précédemment déterminée,
- déterminer, en fonction des données déchiffrées et de la clef de chiffrement utilisée pour l'étape précédente, un deuxième code d'authentification,
- si le premier code d'authentification est égal au deuxième code d'authentification, alors, envoyer, en réponse à la requête d'accès, les données déchiffrées,
- sinon, envoyer en réponse à la requête d'accès, un message indiquant une indisponibilité des données,

l'index courant étant mis à jour périodiquement, la période de mise à jour étant égale à la durée de validité d'une clef de chiffrement, la mise à jour comprenant :

- un effacement et remplacement de la clef de chiffrement associée à l'index courant par une nouvelle clef de chiffrement unique,
- une incrémentation circulaire de l'index courant.

Selon un mode de réalisation de l'invention complémentaire, les données étant enregistrées en outre en association avec une information dite propriétaire, le procédé comprend une étape antérieure à l'étape de déchiffrement :

- déterminer une nouvelle clef de chiffrement en fonction de la clef de chiffrement associée à l'index de chiffrement et de l'information dite propriétaire, et :
- déchiffrer les données reçues se fait au moyen de la nouvelle clef de chiffrement,
- déterminer le deuxième code d'authentification se fait en fonction des données déchiffrées et de la nouvelle clef de chiffrement.

L'invention concerne également un serveur d'un système de gestion de données permettant un contrôle temporel des accès aux données, le serveur comprenant une liste indexée de clefs de chiffrement, chaque index étant associé à une clef de chiffrement unique, chaque clef de chiffrement étant associée à une même durée de validité prédéfinie, un index dit courant étant initialement prédéterminé, le serveur étant adapté pour exécuter les étapes suivantes :

- recevoir un message comprenant des données à enregistrer dans le système de gestion de données, ainsi qu'une information concernant un délai de conservation souhaité de ces données,
- déterminer un index de chiffrement, en fonction du délai de conservation souhaité, de la durée de validité d'une clef de chiffrement, d'un index courant et de la taille de la liste indexée de clefs de chiffrement,
- chiffrer les données reçues au moyen de la clef de chiffrement associée à l'index de chiffrement,
- déterminer, en fonction des données reçues et de la clef de chiffrement utilisée pour l'étape précédente de chiffrement de ces données, un code d'authentification, et
- enregistrer lesdites données chiffrées en association avec l'index de chiffrement et le code d'authentification,

l'index courant étant mis à jour périodiquement, la période de mise à jour étant égale à la durée de validité d'une clef de chiffrement, la mise à jour comprenant :

- un effacement et remplacement de la clef de chiffrement associée à l'index courant par une nouvelle clef de chiffrement unique,
- une incrémentation circulaire de l'index courant.

L'invention concerne également un serveur d'un système de gestion de données permettant un contrôle temporel des accès aux données, le serveur comprenant une liste indexée de clefs de chiffrement, chaque index étant associé à une clef de chiffrement unique, chaque clef de chiffrement étant associée à une même durée de validité prédéfinie, un index dit courant étant initialement prédéterminé, le serveur étant adapté pour exécuter les étapes suivantes :

- recevoir une requête d'accès à des données enregistrées dans le système de gestion, les données étant enregistrées chiffrées et en association avec un index de chiffrement et un premier code d'authentification,
- retrouver, en fonction de l'index de chiffrement, la clef de chiffrement de la liste de clefs de chiffrement associée à cet index de chiffrement,
- déchiffrer les données chiffrées au moyen de la clef de chiffrement précédemment déterminée,
- déterminer, en fonction des données déchiffrées et de la clef de chiffrement utilisée pour l'étape précédente, un deuxième code d'authentification,
- si le premier code d'authentification est égal au deuxième code d'authentification, alors, envoyer, en réponse à la requête d'accès, les données déchiffrées,
- sinon, envoyer en réponse à la requête d'accès, un message indiquant une indisponibilité des données,

l'index courant étant mis à jour périodiquement, la période de mise à jour étant égale à la durée de validité d'une clef de chiffrement, la mise à jour comprenant :

- un effacement et remplacement de la clef de chiffrement associée à l'index courant par une nouvelle clef de chiffrement unique,
- une incrémentation circulaire de l'index courant.

L'invention concerne également un système de gestion de données permettant un contrôle temporel des accès aux données, le système de gestion comprenant :

- un serveur tel que décrit dans le présent document,
- au moins un dispositif électronique dit client permettant d'envoyer des données à enregistrer vers ledit serveur, les données étant associées à un délai de conservation souhaité, et/ou,
- au moins un dispositif électronique dit client permettant d'envoyer une requête d'accès à des données enregistrées dans le système de gestion.

L'invention concerne également un programme d'ordinateur comprenant des instructions pour mettre en œuvre, par un processeur d'un serveur d'un système de gestion de données, un procédé d'enregistrement de données pour un contrôle temporel d'un accès aux données du système de gestion de données tel que décrit dans le présent document, lorsque le programme d'ordinateur est exécuté par le processeur.

L'invention concerne également un support d'enregistrement, lisible par un serveur d'un système de gestion de données, sur lequel est stocké le précédent programme d'ordinateur.

L'invention concerne également un programme d'ordinateur comprenant des instructions pour mettre en œuvre, par un processeur d'un serveur d'un système de gestion de données, un procédé d'accès, avec contrôle temporel, à des données du système de gestion de données tel que décrit dans le présent document, lorsque le programme d'ordinateur est exécuté par le processeur.

L'invention concerne également un support d'enregistrement, lisible par un serveur d'un système de gestion de données, sur lequel est stocké le précédent programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la **Fig. 1** illustre schématiquement un procédé d'enregistrement de données pour un contrôle temporel d'un accès à des données d'un système de gestion de données selon un mode de réalisation de l'invention,

- la **Fig. 2** illustre schématiquement un procédé d'accès à des données d'un système de gestion de données permettant un contrôle temporel des accès aux données selon un mode de réalisation de l'invention,
- les **Figs. 3A, 3B et 3C** illustrent schématiquement un exemple d'incrémentation d'un index courant sur une liste indexée de clefs de chiffrement selon un mode de réalisation de l'invention,
- la **Fig. 4** illustre schématiquement l'architecture d'un système de gestion de données selon un mode de réalisation de l'invention,
- la **Fig. 5** illustre schématiquement l'architecture matérielle d'un serveur d'un système de gestion de données selon un mode de réalisation de l'invention.

L'invention permet à un système de gestion de données de pouvoir garantir que des données, associées à une durée de vie limitée, ne sont plus accessibles passé un délai correspondant à la durée de vie des données. Le principe de l'invention est de chiffrer les données à enregistrer avec différentes clefs de chiffrement, chaque clef de chiffrement ayant une durée de vie elle-même limitée. Ainsi, lorsqu'une clef de chiffrement n'est plus accessible, les données chiffrées avec cette même clef de chiffrement deviennent *de facto* elles aussi inaccessibles.

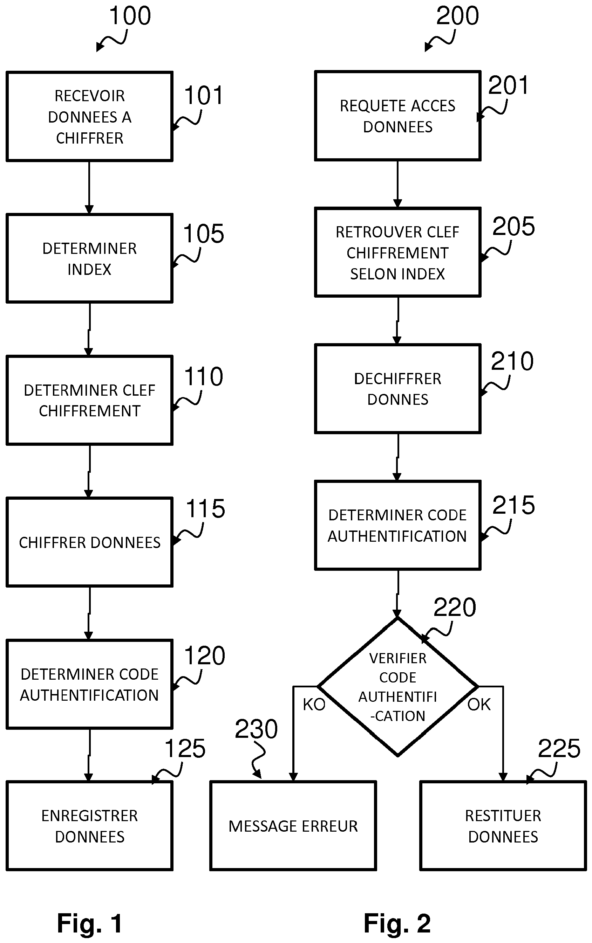

La **Fig. 1** illustre schématiquement un procédé 100 d'enregistrement de données pour un contrôle temporel d'un accès à des données d'un système de gestion de données selon un mode de réalisation de l'invention.

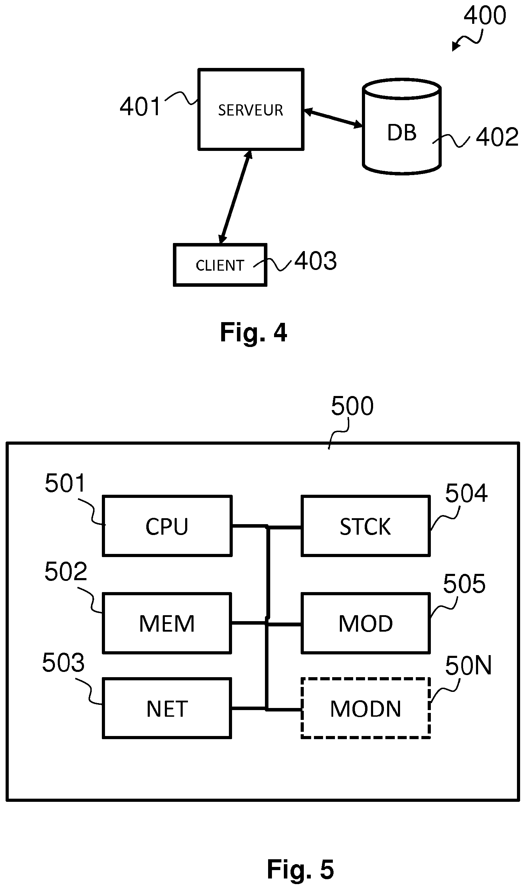

Le procédé 100 est typiquement exécuté par un serveur d'un système de gestion de données tel qu'un serveur 401 de la Fig. 4. Le serveur comprend une liste indexée de N clefs de chiffrement. Chaque index {1, ..., N} de la liste est associé à une clef de chiffrement unique. Chaque clef de chiffrement est associée à une même durée de validité T prédéfinie. Un index « Ind » dit courant est initialement prédéterminé lors de la première initialisation du procédé 100.

L'index courant est mis à jour périodiquement, la période de mise à jour étant égale à la durée de validité d'une clef de chiffrement. La mise à jour de l'index courant comprend les opérations suivantes, dans cet ordre :

- un remplacement (et donc effacement) de la clef de chiffrement associée à l'index courant par une nouvelle clef de chiffrement unique,
- une incrémentation circulaire de l'index courant.

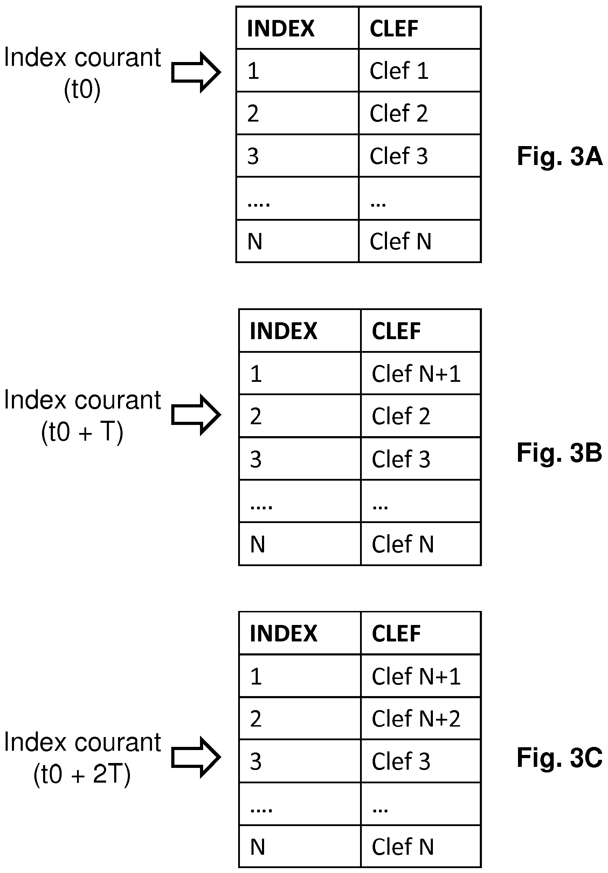

La nouvelle clef de chiffrement peut être prédéfinie ou bien générée aléatoirement à la demande. On parle ici d'incrémentation circulaire de l'index courant afin de prendre en compte le cas où l'index courant atteint la valeur maximale de la liste indexée, c'est-à-dire N. L'incrémentation est circulaire dans le sens ou après la valeur de N, l'index courant recommence au début de la liste indexée. Dans le cas de l'exemple illustré en Fig. 3, l'index courant passe ainsi de la valeur N à la valeur 1 lors d'une mise à jour.

Selon un mode de réalisation de l'invention, le serveur peut enregistrer un temps ou moment d'initialisation du procédé 100. Ce temps ou moment peut aussi être prédéfini. Ainsi, en cas de redémarrage du serveur mettant en œuvre le procédé 100, le serveur est en mesure, à partir du moment d'initialisation du procédé, du temps courant et de la durée de validité de chaque clef de chiffrement, de recalculer une valeur correcte de l'index courant.

Lors d'une première étape 101, le serveur reçoit un message comprenant des données à enregistrer dans le système de gestion de données, ainsi qu'une information concernant un délai de conservation V souhaité de ces données. Le serveur reçoit typiquement des données à enregistrer, les données étant accompagnées d'une durée de validité, ou délai de conservation, des données à respecter. Selon un mode de réalisation de l'invention, le délai de conservation des données à enregistrer est prédéterminé. Ainsi, toute donnée reçue et à enregistrer est à conserver pour une durée prédéfinie connue. La durée de validité des données, ou plus précisément la date de fin de validité des données peut être aisément déterminée en fonction de la date courante, c'est-à-dire le moment de réception des données, et de la durée de validité prédéterminée. Le procédé passe ensuite à l'étape 105 suivante.

Lors de l'étape 105, le serveur détermine, en fonction du délai de conservation V souhaité, de la durée de validité d'une clef de chiffrement, de l'index courant et de la taille de la liste, un index de chiffrement. L'index de chiffrement « IndCh » est déterminé selon la formule suivante :

$$IndCh = (Ind + 1 + partie\_entière(V/T))\ modulo\ N,$$

avec :

IndCh : index de chiffrement,
Ind : index courant,
partie_entière( ) : fonction donnant la partie entière d'un nombre réel,
V : délai de conservation souhaité des données à enregistrer,
T : durée de validité d'une clef de chiffrement,

modulo : fonction « modulo » d'opération de calcul du reste de la division euclidienne,
N : nombre de clef de chiffrement, ou, dit autrement, taille de la liste indexée de clef de chiffrement.

Ce procédé permet donc une durée de validité maximale égale à N*T, avec une granularité définie par T. Ainsi, si la durée de conservation doit être respectée, par exemple au jour près, alors la durée de validité T doit être choisie égale à « un jour ».

Par exemple, afin de garantir une durée de validité des données enregistrées de 12 mois, et afin de respecter cette obligation, par exemple légale, au jour près, alors, on choisira :

- durée de validité d'une clef de chiffrement T égale à une journée,
- taille de la liste indexée (ou nombre de clef) N égale à 366.

Il est alors possible d'enregistrer toutes données reçues pour une durée exacte de 365 ou 366 jours selon que l'année soit bissextile ou non. Selon un mode de réalisation de l'invention, la mise à jour de l'index courant est alors avantageusement réalisé à minuit chaque jour. Le serveur passe ensuite à une étape 110.

Lors d'une étape 110, le serveur détermine la clef de chiffrement associée à l'index de chiffrement précédemment déterminé. Pour cela, selon ce mode de réalisation de l'invention, le serveur retrouve la clef de chiffrement correspondant à l'index de chiffrement dans la liste des clefs de chiffrement.

Lors d'une étape suivante 115, le serveur chiffre les données reçues au moyen de la clef de chiffrement déterminée lors de l'étape 110. Dit autrement, le serveur chiffre les données reçues au moyen de la clef de chiffrement associée à l'index de chiffrement dans la liste indexée. Le serveur passe ensuite à l'étape 120. Selon un mode de réalisation, les étapes 115 et 120 sont réalisées en parallèle ou dans un ordre différent.

Lors de l'étape 120, le serveur détermine, en fonction des données reçues et de la clef de chiffrement utilisée pour l'étape 115 de chiffrement de ces données, un code d'authentification de message (ou MAC pour « *Message Authentication Code* » en anglais). Le code d'authentification est généré en fonction des données à enregistrer mais aussi de la clef de chiffrement utilisée pour chiffrer les données.

Dans une étape suivante 125, le serveur enregistre les données chiffrées lors de l'étape 115 en association avec l'index de chiffrement, déterminé lors de l'étape 105, et le code d'authentification déterminé lors de l'étape 120.

Selon un mode de réalisation complémentaire de l'invention, le message reçu lors de l'étape 101 comprend de plus une information dite propriétaire. Dit autrement, les données à enregistrer comprennent un champ dit propriétaire. Le procédé 100 comprend alors une étape 110 modifiée de détermination de la clef de chiffrement, antérieure à l'étape 115 de chiffrement. L'étape 110 est ainsi modifiée en ce que déterminer une nouvelle clef de chiffrement est réalisé en fonction de la clef de chiffrement associée à l'index de chiffrement et de l'information dite propriétaire. Ainsi, par exemple, la nouvelle clef de chiffrement est ainsi déterminée :

$$Clef(chiffrement) = Clef(Index\_chiffrement) \wedge Hash(P),$$

avec

Clef(chiffrement) : nouvelle clef de chiffrement déterminée lors de l'étape 110, nouvelle clef de chiffrement qui est utilisée lors des étapes ultérieures 115 et 120,
Clef(Index_Chiffrement) : clef de chiffrement dans la liste des clefs de chiffrement associée à l'index de chiffrement déterminé lors de l'étape 105,
« ^ » : fonction « ou exclusif »,
Hash() : fonction de calcul d'un condensat (« hash » en anglais),
P : information dite propriétaire.

Idéalement, la fonction « *Hash()* » permet de générer un condensat à partir de l'information dite propriétaire, le condensat ayant une taille identique à celle d'une clef de chiffrement. Il est alors aisé de réaliser une fonction « ou exclusif » entre la clef de chiffrement correspondant à l'index de chiffrement déterminé lors de l'étape 105 et le condensat. Toute autre fonction que la fonction « ou exclusif » peut être utilisée.

Cette étape 110 modifiée permet ainsi de générer une nouvelle clef de chiffrement en fonction de la clef de chiffrement associée à l'index de chiffrement et de l'information dite propriétaire.

Selon ce mode de réalisation complémentaire de l'invention, suite à cette étape 110 modifiée, le serveur chiffre (étape 115) les données reçues au moyen de la nouvelle clef de chiffrement et détermine (étape 120) le code d'authentification en fonction des données reçues et de la nouvelle clef de chiffrement (et non pas au moyen de la clef de chiffrement associée à l'index de chiffrement). Suite à cela, le serveur enregistre les données ainsi chiffrées en association avec l'index de chiffrement et le code d'authentification et en outre en association avec l'information dite propriétaire. Dit autrement, selon ce mode de réalisation complémentaire :

- une nouvelle clef de chiffrement est générée par le serveur à partir de la clef de chiffrement associée à l'index de chiffrement et d'une information dite propriétaire, et,
- l'information dite propriétaire est enregistrée par le serveur en association avec les données chiffrées et le code d'authentification.

Ce procédé 100, selon le mode de réalisation complémentaire ou non, permet ainsi d'enregistrer des données chiffrées, la clef de chiffrement, indispensable comme décrit ci-après pour déchiffrer les données, n'étant accessible que pour une durée fonction du délai de conservation souhaité. En effet, passé ce délai, et au vu du mécanisme de mise à jour de l'index courant précédemment décrit, la clef de chiffrement sera remplacée par une nouvelle clef de chiffrement et sera donc définitivement effacée. Les données, même conservées, sont alors inaccessibles.

La Fig. 2 illustre schématiquement un procédé 200 d'accès à des données d'un système de gestion de données permettant un contrôle temporel des accès aux données selon un mode de réalisation de l'invention. Le procédé 200 est exécuté par un serveur d'un système de gestion, le serveur comprenant une liste indexée de clefs de chiffrement, chaque index étant associé à une clef de chiffrement unique, chaque clef de chiffrement étant associée à une même durée de validité prédéfinie. Le serveur est possiblement celui exécutant le procédé 100 de la Fig. 1. Un index dit courant est initialement prédéterminé.

Dans une première étape 201, le serveur reçoit une requête d'accès à des données enregistrées dans le système de gestion, les données étant enregistrées chiffrées et en association avec un index de chiffrement et un premier code d'authentification. Ces données chiffrées ont avantageusement précédemment été enregistrées par un serveur, par exemple le serveur 401 illustré dans la Fig. 4, en suivant le procédé 100. Ces données sont retrouvées par le serveur, ainsi que l'index de chiffrement et le premier code d'authentification. Possiblement, selon le mode de réalisation de l'invention, une information dite propriétaire est aussi associée aux données chiffrées enregistrées par le serveur. La requête est typiquement envoyée par un dispositif électronique dit client.

Dans une étape suivante 205, le serveur retrouve, en fonction de l'index de chiffrement retrouvé lors de l'étape précédente, la clef de chiffrement de la liste de clefs de chiffrement associée à cet index de chiffrement.

Dans une étape suivante 210, le serveur déchiffre les données chiffrées au moyen de la clef de chiffrement ainsi déterminée ou retrouvée.

Dans une étape suivante 215, le serveur détermine, en fonction des données déchiffrées (étape 210) et de la clef de chiffrement utilisée lors de l'étape 210 précédente de déchiffrement, un deuxième code d'authentification.

Dans une étape suivante 220, le serveur détermine si le premier code d'authentification est égal ou non au deuxième code d'authentification. Si c'est le cas, alors le serveur envoie, en réponse à la requête d'accès reçue lors de l'étape 201, les données déchiffrées au dispositif électronique client concerné. En effet, l'égalité du premier code d'authentification et du deuxième code d'authentification permet de garantir que la clef de chiffrement utilisée lors de l'étape (115, Fig. 1) de chiffrement des données et la clef de chiffrement utilisée lors de l'étape (210, Fig. 2) de déchiffrement des données sont identiques. Cela signifie que la clef de chiffrement n'a pas encore été remplacée lors d'une opération de mise à jour de l'index courant et que les données sont encore valides, c'est-à-dire que la durée de validité n'a pas expirée.

Dans le cas contraire, en cas d'inégalité du premier code d'authentification et du deuxième code d'authentification, cela signifie que la clef de chiffrement déterminée lors de l'étape 205 n'est plus égale à celle utilisée lors de l'étape (115, Fig. 1) de chiffrement. Dans ce cas, le serveur envoie en réponse à la requête d'accès un message indiquant une indisponibilité des données. Il est à noter que les données déchiffrées, ayant été déchiffrées avec une clef de chiffrement ne correspondant pas à celle utilisée lors du chiffrement, ne correspondent pas aux données initialement à enregistrer par le serveur. Ces dernières données sont devenues inaccessibles, la clef de chiffrement ayant servi à leur chiffrement n'étant elle-même plus accessible.

De même que pour le procédé 100, lors du procédé 200 le serveur réalise une mise à jour périodique de l'index courant, la période de mise à jour étant égale à la durée de validité d'une clef de chiffrement. La mise à jour comprend un effacement et remplacement de la clef de chiffrement associé à l'index courant par une nouvelle clef de chiffrement unique et une incrémentation circulaire de l'index courant.

De façon plus générale, les étapes de mises à jour périodiques de l'index courant sont réalisées par le serveur de façon continu, indépendamment d'un besoin d'enregistrement ou d'accès à des données. L'index courant est bien sur le même pour la réalisation des procédé 100 et 200.

Selon un mode de réalisation complémentaire de l'invention, les données chiffrées sont enregistrées en outre en association avec une information dite propriétaire, comme vu précédemment. Le procédé 200 comprend alors une étape 205 modifiée antérieure à l'étape de déchiffrement. Dans cette étape 205 modifié, le serveur détermine une nouvelle clef de chiffrement en fonction de la clef de chiffrement associée à l'index de chiffrement et de l'information dite propriétaire. La nouvelle clef de chiffrement est déterminée de façon identique à la nouvelle clef de chiffrement décrite dans la Fig. 1 lors de l'étape 110 modifiée, c'est-à-dire selon le mode de réalisation complémentaire de l'invention. Ainsi, la nouvelle clef de chiffrement peut être déterminée par la formule :

$$Clef(chiffrement) = Clef(Index\_chiffrement) \wedge Hash(P),$$

avec

Clef(chiffrement) : nouvelle clef de chiffrement déterminée lors de l'étape 110, nouvelle clef de chiffrement qui est utilisée lors des étapes ultérieures 115 et 120,
Clef(Index_Chiffrement) : clef de chiffrement dans la liste des clefs de chiffrement associée à l'index de chiffrement déterminé lors de l'étape 105,
« ^ » : fonction « ou exclusif »,
Hash() : fonction de calcul d'un condensat (« hash » en anglais),
P : information dite propriétaire.

Suite à cette étape 205 modifiée, le serveur déchiffre (étape 210) les données reçues au moyen de la nouvelle clef de chiffrement et détermine (étape 215) le deuxième code d'authentification en fonction des données déchiffrées et de la nouvelle clef de chiffrement.

Avantageusement, il est ainsi possible de rendre inaccessible des données enregistrées en supprimant uniquement l'information dite propriétaire associée à des données chiffrées enregistrées par le serveur. En effet, selon le mode de réalisation complémentaire, les données chiffrées sont inaccessibles sans la connaissance de l'information dite propriétaire, celle-ci étant alors obligatoire pour déterminer la nouvelle clef de chiffrement.

Les **Figs. 3A, 3B et 3C** illustrent schématiquement un exemple d'incrémentation d'un index courant sur une liste indexée de clefs de chiffrement selon un mode de réalisation de l'invention. Chaque figure 3A, 3B et 3C représente la liste indexée (colonne de gauche) des clefs de chiffrement (colonne de droite), ainsi que, sur la gauche des figures, la position (ou valeur) de l'index courant (« Ind »).

Dans la Fig. 3A, correspondant par exemple à un temps « t0 » d'initialisation des procédés 100 et 200 par le serveur, l'index courant (« Ind ») pointe vers l'index « 1 » de la liste des N clefs de chiffrements (Clef, 1, Clef, 2, ...Clef N).

La Fig. 3B correspond à une mise à jour de l'index courant de la Fig. 3A. La mise à jour comprend :

- un remplacement (et donc effacement) de la clef de chiffrement associée à l'index courant « Ind » par une nouvelle clef de chiffrement unique, c'est-à-dire ici un remplacement (et effacement) de la clef de chiffrement « clef 1 » par une nouvelle clef de chiffrement « Clef N+1 »,
- une incrémentation circulaire de l'index courant « Ind », c'est-à-dire ici une valeur de l'index courant passant de « 1 » à « 2 ».

La Fig. 3C correspond à une mise à jour de l'index courant « Ind », c'est-à-dire après une durée T, durée de validité d'une clef de chiffrement, partant de la Fig. 3B. Comme précédemment, la mise à jour comprend :

- un remplacement (et donc effacement) de la clef de chiffrement associée à l'index courant « Ind » par une nouvelle clef de chiffrement unique, c'est-à-dire ici un remplacement (et effacement) de la clef de chiffrement « clef 2 » par une nouvelle clef de chiffrement « Clef N+2 »,
- une incrémentation circulaire de l'index courant « Ind », c'est-à-dire ici une valeur de l'index courant passant de « 2 » à « 3 ».

On parle d'incrémentation « circulaire » de l'index courant puisqu'une fois que l'index courant atteint la valeur maximale « N », il repasse ensuite à la première valeur de l'index de la liste de clef de chiffrement, c'est-à-dire ici « 1 ».

Ainsi, partant d'un moment « t0 », et passé un délai égal à N*T, avec N correspond à la taille de la liste indexée des clefs de chiffrement, et T la durée de validité d'une clef de chiffrement, alors, au moment « t0 + N*T » toutes les clefs de chiffrements de la liste existantes au moment t0 auront été remplacées par de nouvelles clefs de chiffrement dans la liste des clefs de chiffrement.

La **Fig. 4** illustre schématiquement l'architecture d'un système 400 de gestion de données selon un mode de réalisation de l'invention.

Le serveur 401 est le serveur exécutant typiquement les procédés 100 et 200 précédemment décrit. Le serveur 401 est adapté pour accéder à une base de données 402. Lorsque le serveur 401 enregistre ou retrouve une donnée, il faut alors comprendre que le serveur 401 accède à la base de données 402 afin d'y enregistrer ou lire ladite donnée.

Selon une mode de réalisation de l'invention, le serveur 401 héberge la base de données 402.

Le serveur 401 est adapté pour :

- recevoir un message comprenant des données à enregistrer dans le système 400 de gestion de données, ainsi qu'une information concernant un délai de conservation souhaité de ces données,
- déterminer, en fonction du délai de conservation souhaité, de la durée de validité d'une clef de chiffrement, d'un index courant et de la taille de la liste, un index de chiffrement,
- chiffrer les données reçues au moyen de la clef de chiffrement associée à l'index de chiffrement,
- déterminer, en fonction des données reçues et de la clef de chiffrement utilisée pour l'étape précédente de chiffrement de ces données, un code d'authentification, et
- enregistrer lesdites données chiffrées en association avec l'index de chiffrement et le code d'authentification.

Le serveur 401 est typiquement aussi adapté pour :

- recevoir une requête d'accès à des données enregistrées dans le système de gestion, les données étant enregistrées chiffrées et en association avec un index de chiffrement et un premier code d'authentification,
- retrouver, en fonction de l'index de chiffrement, la clef de chiffrement de la liste de clefs de chiffrement associée à cet index de chiffrement,
- déchiffrer les données chiffrées au moyen de la clef de chiffrement précédemment déterminée,
- déterminer, en fonction des données déchiffrées et de la clef de chiffrement utilisée pour l'étape précédente, un deuxième code d'authentification,
- si le premier code d'authentification est égal au deuxième code d'authentification, alors, envoyer, en réponse à la requête d'accès, les données déchiffrées,
- sinon, envoyer en réponse à la requête d'accès, un message indiquant une indisponibilité des données.

Le serveur 401 étant adapté pour mettre à jour périodiquement l'index courant, la période de mise à jour étant égale à la durée de validité d'une clef de chiffrement, la mise à jour comprenant :

- un effacement et remplacement de la clef de chiffrement associée à l'index courant par une nouvelle clef de chiffrement unique,
- une incrémentation circulaire de l'index courant.

Le dispositif électronique dit client 403 est un dispositif électronique pouvant envoyer des données au serveur 401, pour enregistrement de ces données par le système 400 de gestion de données. Le dispositif électronique 403 est aussi adapté pour envoyer des requêtes afin de retrouver des données enregistrées par le système 400 de gestion de données. Selon un mode de réalisation, le dispositif électronique 403 est adapté pour envoyer, en association avec les données à enregistrer, une durée de conservation souhaitée pour la conservation desdites données. Selon un mode de réalisation alternatif, le serveur 401 utilise une durée de conservation souhaitée des données reçues prédéfinie. Possiblement, la durée de conservation des données à enregistrer dépend du type des données à enregistrer. Alternativement, le serveur 401 peut interagir avec un autre système ou base de données afin de récupérer une durée de conservation souhaitée pour des données reçues.

Selon un mode de réalisation, le serveur 401, ainsi que la base de données 402, sont gérés par un premier utilisateur. Le client 403 correspond à un deuxième utilisateur. Une pluralité de clients 403, correspondant possiblement à des utilisateurs différents peuvent coexister. L'information dite propriétaire P, associée à des données à enregistrer par un client 403, peut correspondre à un identifiant associé à l'utilisateur du client 403. Par exemple, l'information propriétaire P correspond au nom du client. Il est ainsi possible de rendre inaccessible toutes les données enregistrées par le système 400 de gestion en supprimant (ou en mettant à zéro, en remplaçant par une valeur par défaut, etc.), pour toutes les données enregistrées dans la base de données 402, l'information dite propriétaire P associée aux données chiffrées enregistrées. Ainsi, la clef de chiffrement permettant de déchiffrer les données associées à ce client ne peut plus être déterminée, les données sont donc inaccessibles.

Ce système de gestion 400 peut avantageusement être utilisé par un fournisseur d'équipements afin de sauvegarder des informations de configuration de ces équipements. Ces équipements sont par exemple des équipements de type compteurs communicants (« *smart meter* » en anglais), fournis à un client. Le système de gestion 400 permet de garantir que les informations de configuration, c.-à-d. les données enregistrées par le serveur 401 dans la base de données 402, sont bien accessibles au client pendant un temps prédéterminé, et que ces données deviennent bien inaccessibles, pour tout le monde, passé ce délai. Dit autrement, si les données chiffrées sont bien enregistrées par le système 400 de gestion, et possiblement sauvegardées, il n'est plus possible de les déchiffrer passé le délai de conservation souhaité.

La **Fig. 5** illustre schématiquement l'architecture matérielle d'un serveur 500 d'un système de gestion de données selon un mode de réalisation de l'invention. Le serveur 500 est par exemple le serveur 401 de la Fig. 4. Le serveur 500 est adapté pour exécuter les procédés illustrés dans les Fig. 1 et Fig. 2.

Ainsi, le serveur 500 comprend, reliés par un bus de communication : un processeur ou CPU (« *Central Processing Unit* » en anglais) 501 ; une mémoire MEM 502 de type RAM (« *Random Access Memory* » en anglais) et/ou ROM (« *Read Only Memory* » en anglais), un module réseau NET 503, un module de stockage STCK 504 de type stockage interne et possiblement une pluralité de modules 505 à 50N. Le module de stockage STCK 504 peut être de type disque dur HDD (« *Hard Disk Drive* » en anglais) ou SSD (« *Solid-State Drive* » en anglais), ou de type lecteur de support de stockage externe, tel un lecteur de cartes SD (« *Secure Digital* » en anglais). Le processeur CPU 501 peut enregistrer des données, ou informations, dans la mémoire MEM 502 ou dans le module de stockage STCK 504. Le processeur CPU 501 peut lire des données enregistrées dans la mémoire MEM 502 ou dans le module de stockage STCK 504. Le processeur CPU 501 peut enregistrer des données, ou informations, dans une base de données telle que la base de données 402 de la Fig. 4, possiblement via le module réseau NET 503. Le processeur CPU 501 peut lire des données, ou informations, dans une base de données telle que la base de données 402 de la Fig. 4, possiblement via le module réseau NET 50. Ces données peuvent correspondre à des paramètres de configuration, des instructions ou des données reçues dans des messages envoyés par d'autres dispositifs électroniques, par exemple des dispositifs électroniques dits clients. Le module réseau NET 503 permet la connexion du serveur 500 à un réseau local et/ou Internet. Chaque module 505 à 50N peut comporter des fonctionnalités telles que des fonctionnalités matérielles de chiffrement et/ ou de déchiffrement, de calcul de condensat ou autre module spécialisé. Un module 505 ou 50N peut être un élément dit sécurisé (SE ou « *Secured Element* » en anglais) permettant par exemple une exécution sécurisée de tout ou partie des étapes des procédés 100 et 200 illustrés dans les Fig. 1 et 2.

Le processeur CPU 501 est capable d'exécuter des instructions chargées dans la mémoire MEM 502, par exemple à partir du module de stockage STCK 504 ou via le module réseau NET 503. Lorsque le serveur 500 est mis sous tension, le processeur CPU 501 est capable de lire de la mémoire MEM 502 des instructions et de les exécuter. Ces instructions forment un programme d'ordinateur causant la mise en œuvre, par le processeur CPU 501, de tout ou partie des procédés et étapes décrits précédemment, particulièrement les procédés décrits dans la Fig. 1 et dans la Fig. 2. Ainsi, tout ou partie des procédés et étapes décrits ci-avant peut être implémenté sous forme logicielle par exécution d'un ensemble d'instructions par une machine programmable, tel qu'un DSP (« *Digital Signal Processor »* en anglais) ou un microcontrôleur. Tout ou partie des procédés et étapes décrits ici peuvent aussi être implémentés sous forme matérielle par une machine ou un composant dédié, tel qu'un FPGA (« *Field-Programmable Gate Array »* en anglais) ou un ASIC (« *Application-Specific Integrated Circuit »* en anglais). Les fonctions du serveur 500 peuvent être intégrées dans un système de gestion de base de données.

## Revendications

1. Procédé (100) d'enregistrement de données pour un contrôle temporel d'un accès à des données d'un système (400) de gestion de données comprenant un serveur (401, 500), le procédé étant exécuté par le serveur, le serveur comprenant une liste indexée de clefs de chiffrement, chaque index étant associé à une clef de chiffrement unique, chaque clef de chiffrement étant associée à une même durée de validité prédéfinie, un index dit courant étant initialement prédéterminé, le procédé comprenant les étapes suivantes :

    - recevoir (101) un message comprenant des données à enregistrer dans le système de gestion de données, ainsi qu'une information concernant un délai de conservation souhaité de ces données,
    - déterminer (105) un index de chiffrement, en fonction du délai de conservation souhaité, de la durée de validité d'une clef de chiffrement, de l'index courant et de la taille de la liste indexée de clefs de chiffrement,
    - chiffrer (115) les données reçues au moyen de la clef de chiffrement associée à l'index de chiffrement,
    - déterminer (120), en fonction des données reçues et de la clef de chiffrement utilisée pour l'étape précédente de chiffrement de ces données, un code d'authentification, et
    - enregistrer (125) lesdites données chiffrées en association avec l'index de chiffrement et le code d'authentification,

    l'index courant étant mis à jour périodiquement, la période (T) de mise à jour étant égale à la durée de validité d'une clef de chiffrement, la mise à jour comprenant :

    - un effacement et remplacement de la clef de chiffrement associée à l'index courant par une nouvelle clef de chiffrement unique,

- une incrémentation circulaire de l'index courant.

**2.** Procédé selon la revendication précédente, le message comprenant les données à enregistrer comprenant de plus une information dite propriétaire, le procédé comprenant une étape antérieure à l'étape de chiffrement :

- déterminer (110) une nouvelle clef de chiffrement en fonction de la clef de chiffrement associée à l'index de chiffrement et de l'information dite propriétaire, et :

- chiffrer (115) les données reçues se faisant au moyen de la nouvelle clef de chiffrement,
- déterminer (120) le code d'authentification se faisant en fonction des données reçues et de la nouvelle clef de chiffrement, et
- enregistrer (125) les données chiffrées en association avec l'index de chiffrement et le code d'authentification se faisant en outre en association avec l'information dite propriétaire.

**3.** Procédé (200) d'accès à des données d'un système (400) de gestion de données permettant un contrôle temporel des accès aux données, le système de gestion comprenant un serveur (401, 500), le procédé étant exécuté par le serveur, le serveur comprenant une liste indexée de clefs de chiffrement, chaque index étant associé à une clef de chiffrement unique, chaque clef de chiffrement étant associée à une même durée de validité prédéfinie, un index dit courant étant initialement prédéterminé, le procédé comprenant les étapes suivantes :

- recevoir (201) une requête d'accès à des données enregistrées dans le système de gestion, les données étant enregistrées chiffrées et en association avec un index de chiffrement et un premier code d'authentification,
- retrouver (205), en fonction de l'index de chiffrement, la clef de chiffrement de la liste de clefs de chiffrement associée à cet index de chiffrement,
- déchiffrer (210) les données chiffrées au moyen de la clef de chiffrement précédemment déterminée,
- déterminer (215), en fonction des données déchiffrées et de la clef de chiffrement utilisée pour l'étape précédente, un deuxième code d'authentification,
- si le premier code d'authentification est égal au deuxième code d'authentification, alors, envoyer (225), en réponse à la requête d'accès, les données déchiffrées,
- sinon, envoyer (230) en réponse à la requête d'accès, un message indiquant une indisponibilité des données,

l'index courant étant mis à jour périodiquement, la période (T) de mise à jour étant égale à la durée de validité d'une clef de chiffrement, la mise à jour comprenant :

- un effacement et remplacement de la clef de chiffrement associée à l'index courant par une nouvelle clef de chiffrement unique,
- une incrémentation circulaire de l'index courant.

**4.** Procédé selon la revendication précédente, les données étant enregistrées en outre en association avec une information dite propriétaire, le procédé comprenant une étape antérieure à l'étape de déchiffrement :

- déterminer (205) une nouvelle clef de chiffrement en fonction de la clef de chiffrement associée à l'index de chiffrement et de l'information dite propriétaire, et :
- déchiffrer (210) les données reçues se faisant au moyen de la nouvelle clef de chiffrement,
- déterminer (215) le deuxième code d'authentification se faisant en fonction des données déchiffrées et de la nouvelle clef de chiffrement.

**5.** Serveur (401, 500) d'un système (400) de gestion de données permettant un contrôle temporel des accès aux données, le serveur comprenant une liste indexée de clefs de chiffrement, chaque index étant associé à une clef de chiffrement unique, chaque clef de chiffrement étant associée à une même durée de validité prédéfinie, un index dit courant étant initialement prédéterminé, le serveur étant adapté pour exécuter les étapes suivantes :

- recevoir (101) un message comprenant des données à enregistrer dans le système de gestion de données, ainsi qu'une information concernant un délai de conservation souhaité de ces données,
- déterminer (105) un index de chiffrement, en fonction du délai de conservation souhaité, de la durée de validité d'une clef de chiffrement, d'un index courant et de la taille de la liste indexée de clefs de chiffrement,
- chiffrer (115) les données reçues au moyen de la clef de chiffrement associée à l'index de chiffrement,
- déterminer (120), en fonction des données reçues et de la clef de chiffrement utilisée pour l'étape précédente de chiffrement de ces données, un code d'authentification, et
- enregistrer (125) lesdites données chiffrées en association avec l'index de chiffrement et le code d'authentification,

l'index courant étant mis à jour périodiquement, la période (T) de mise à jour étant égale à la durée de validité d'une clef de chiffrement, la mise à jour comprenant :

- un effacement et remplacement de la clef de chiffrement associée à l'index courant par une nouvelle clef de chiffrement unique,
- une incrémentation circulaire de l'index courant.

6. Serveur (401, 500) d'un système (400) de gestion de données permettant un contrôle temporel des accès aux données, le serveur comprenant une liste indexée de clefs de chiffrement, chaque index étant associé à une clef de chiffrement unique, chaque clef de chiffrement étant associée à une même durée de validité prédéfinie, un index dit courant étant initialement prédéterminé, le serveur étant adapté pour exécuter les étapes suivantes :

- recevoir (201) une requête d'accès à des données enregistrées dans le système de gestion, les données étant enregistrées chiffrées et en association avec un index de chiffrement et un premier code d'authentification,
- retrouver (205), en fonction de l'index de chiffrement, la clef de chiffrement de la liste de clefs de chiffrement associée à cet index de chiffrement,
- déchiffrer (210) les données chiffrées au moyen de la clef de chiffrement précédemment déterminée,
- déterminer (215), en fonction des données déchiffrées et de la clef de chiffrement utilisée pour l'étape précédente, un deuxième code d'authentification,
- si le premier code d'authentification est égal au deuxième code d'authentification, alors, envoyer (225), en réponse à la requête d'accès, les données déchiffrées,
- sinon, envoyer (230) en réponse à la requête d'accès, un message indiquant une indisponibilité des données,

l'index courant étant mis à jour périodiquement, la période (T) de mise à jour étant égale à la durée de validité d'une clef de chiffrement, la mise à jour comprenant :

- un effacement et remplacement de la clef de chiffrement associée à l'index courant par une nouvelle clef de chiffrement unique,
- une incrémentation circulaire de l'index courant.

7. Système (400) de gestion de données permettant un contrôle temporel des accès aux données, le système de gestion comprenant :

- un serveur (401, 500) selon les revendications 5 et/ou 6,
- au moins un dispositif électronique (403) dit client permettant d'envoyer des données à enregistrer vers ledit serveur, les données étant associées à un délai de conservation souhaité, et/ou,
- au moins un dispositif électronique (403) dit client permettant d'envoyer une requête d'accès à des données enregistrées dans le système de gestion.

8. Programme d'ordinateur, **caractérisé en ce qu'**il comprend des instructions pour mettre en œuvre, par un processeur d'un serveur (401, 500) d'un système (400) de gestion de données, un procédé (100) d'enregistrement de données pour un contrôle temporel d'un accès aux données du système de gestion de données selon l'une des revendications 1 à 2, lorsque le programme d'ordinateur est exécuté par le processeur.

9. Support d'enregistrement, lisible par un serveur (401, 500) d'un système (400) de gestion de données, sur lequel est stocké le programme d'ordinateur selon la revendication précédente.

10. Programme d'ordinateur, **caractérisé en ce qu'**il comprend des instructions pour mettre en œuvre, par un processeur d'un serveur (401, 500) d'un système (400) de gestion de données, un procédé (200) d'accès, avec contrôle temporel, à des données du système de gestion de données selon l'une des revendications 3 à 4, lorsque le programme d'ordinateur est exécuté par le processeur.

11. Support d'enregistrement, lisible par un serveur (401, 500) d'un système (400) de gestion de données, sur lequel est stocké le programme d'ordinateur selon la revendication précédente.

**Patentansprüche**

1. Verfahren (100) zur Speicherung von Daten für eine zeitliche Steuerung eines Zugriffs auf Daten eines Datenverwaltungssystems (400), das einen Server (401, 500) umfasst, wobei das Verfahren vom Server ausgeführt wird, wobei der Server eine indexierte Liste von Verschlüsselungsschlüsseln umfasst, wobei jeder Index einem eindeutigen Verschlüsselungsschlüssel zugeordnet ist, wobei jeder Verschlüsselungsschlüssel einer selben vorgegebenen Gültigkeitsdauer zugeordnet ist, wobei anfangs ein aktueller Index vorbestimmt wird, das Verfahren umfassend die folgenden Schritte:

   - Empfangen (101) einer Nachricht, die Daten, die im Datenverwaltungssystem zu speichern sind, sowie eine Information über eine gewünschte Aufbewahrungsfrist dieser Daten umfasst,
   - Bestimmen (105) eines Verschlüsselungsindex in Abhängigkeit von der gewünschten Aufbewahrungsfrist, der Gültigkeitsdauer eines Verschlüsselungsschlüssels, dem aktuellen Index und der Größe der indexierten Liste von Verschlüsselungsschlüsseln,
   - Verschlüsseln (115) der empfangenen Daten mittels des Verschlüsselungsschlüssels, der dem Verschlüsselungsindex zugeordnet ist,
   - Bestimmen (120) eines Authentifizierungscodes in Abhängigkeit von den empfangenen Daten und dem Verschlüsselungsschlüssel, der für den vorangehenden Schritt des Verschlüsselns dieser Daten genutzt wird, und
   - Speichern (125) der verschlüsselten Daten in Verbindung mit dem Verschlüsselungsindex und dem Authentifizierungscode,

   wobei der aktuelle Index periodisch aktualisiert wird, wobei die Aktualisierungsperiode (T) gleich der Gültigkeitsdauer eines Verschlüsselungsschlüssels ist, die Aktualisierung umfassend:

   - ein Löschen und Ersetzen des Verschlüsselungsschlüssels, der dem aktuellen Index zugeordnet ist, mit einem neuen eindeutigen Verschlüsselungsschlüssel,
   - ein kreisförmiges Inkrementieren des aktuellen Index.

2. Verfahren nach dem vorhergehenden Anspruch, wobei die Nachricht die zu speichernden Daten umfasst, zudem eine proprietäre Information umfasst, wobei das Verfahren einen Schritt umfasst, der dem Schritt des Verschlüsselns vorangeht:

   - Bestimmen (110) eines neuen Verschlüsselungsschlüssels in Abhängigkeit von dem Verschlüsselungsschlüssel, der dem Verschlüsselungsindex zugeordnet ist, und der proprietären Information, und:

     - Verschlüsseln (115) der empfangenen Daten, das mittels des neuen Verschlüsselungsschlüssels erfolgt,
     - Bestimmen (120) des Authentifizierungscodes, das in Abhängigkeit von den empfangenen Daten und dem neuen Verschlüsselungsschlüssel erfolgt, und
     - Speichern (125) der verschlüsselten Daten in Verbindung mit dem Verschlüsselungsindex und dem Authentifizierungscode, das ferner in Verbindung mit der proprietären Information erfolgt.

3. Verfahren (200) zum Zugriff auf Daten eines Datenverwaltungssystems (400), das eine zeitliche Steuerung der Zugriffe auf die Daten gestattet, wobei das Verwaltungssystem einen Server (401, 500) umfasst, wobei das Verfahren vom Server ausgeführt wird, wobei der Server eine indexierte Liste von Verschlüsselungsschlüsseln umfasst, wobei jeder Index einem eindeutigen Verschlüsselungsschlüssel zugeordnet ist, wobei jeder Verschlüsselungsschlüssel einer selben vorgegebenen Gültigkeitsdauer zugeordnet ist, wobei anfangs ein aktueller Index vorbestimmt wird, das Verfahren umfassend die folgenden Schritte:

   - Empfangen (201) einer Anforderung von Zugriff auf Daten, die in dem Verwaltungssystem gespeichert sind, wobei die Daten verschlüsselt und in Verbindung mit einem Verschlüsselungsindex und einem ersten Authentifizierungscode gespeichert werden,
   - Abrufen (205), in Abhängigkeit vom Verschlüsselungsindex, des Verschlüsselungsschlüssels aus der Liste von Verschlüsselungsschlüsseln, der diesem Verschlüsselungsindex zugeordnet ist,
   - Entschlüsseln (210) der verschlüsselten Daten mittels des zuvor bestimmten Verschlüsselungsschlüssels,
   - Bestimmen (215) eines zweiten Authentifizierungscodes in Abhängigkeit von den entschlüsselten Daten und dem Verschlüsselungsschlüssel, der für den vorangehenden Schritt genutzt wird,
   - wenn der erste Authentifizierungscode gleich dem zweiten Authentifizierungscode ist, Senden (225) der entschlüsselten Daten in Reaktion auf die Zugriffs anforderung,

- anderenfalls Senden (230) einer Nachricht, die eine Nichtverfügbarkeit der Daten angibt, in Reaktion auf die Zugriffsanforderung,

wobei der aktuelle Index periodisch aktualisiert wird, wobei die Aktualisierungsperiode (T) gleich der Gültigkeitsdauer eines Verschlüsselungsschlüssels ist, die Aktualisierung umfassend:

- ein Löschen und Ersetzen des Verschlüsselungsschlüssels, der dem aktuellen Index zugeordnet ist, mit einem neuen eindeutigen Verschlüsselungsschlüssel,
- ein kreisförmiges Inkrementieren des aktuellen Index.

4.  Verfahren nach dem vorhergehenden Anspruch, wobei die Daten ferner in Verbindung mit einer proprietären Information gespeichert werden, wobei das Verfahren einen Schritt umfasst, der dem Schritt des Verschlüsselns vorangeht:

- Bestimmen (205) eines neuen Verschlüsselungsschlüssels in Abhängigkeit von dem Verschlüsselungsschlüssel, der dem Verschlüsselungsindex zugeordnet ist, und der proprietären Information, und:

- Entschlüsseln (210) der empfangenen Daten, das mittels des neuen Verschlüsselungsschlüssels erfolgt,
- Bestimmen (215) des zweiten Authentifizierungscodes, das in Abhängigkeit von den entschlüsselten Daten und dem neuen Verschlüsselungsschlüssel erfolgt.

5.  Server (401, 500) eines Datenverwaltungssystems (400), das eine zeitliche Steuerung der Zugriffe auf die Daten gestattet, wobei der Server eine indexierte Liste von Verschlüsselungsschlüsseln umfasst, wobei jeder Index einem eindeutigen Verschlüsselungsschlüssel zugeordnet ist, wobei jeder Verschlüsselungsschlüssel einer selben vorgegebenen Gültigkeitsdauer zugeordnet ist, wobei anfangs ein aktueller Index vorbestimmt wird, wobei der Server geeignet ist, die folgenden Schritte auszuführen:

- Empfangen (101) einer Nachricht, die Daten, die im Datenverwaltungssystem zu speichern sind, sowie eine Information über eine gewünschte Aufbewahrungsfrist dieser Daten umfasst,
- Bestimmen (105) eines Verschlüsselungsindex in Abhängigkeit von der gewünschten Aufbewahrungsfrist, der Gültigkeitsdauer eines Verschlüsselungsschlüssels, einem aktuellen Index und der Größe der indexierten Liste von Verschlüsselungsschlüsseln,
- Verschlüsseln (115) der empfangenen Daten mittels des Verschlüsselungsschlüssels, der dem Verschlüsselungsindex zugeordnet ist,
- Bestimmen (120) eines Authentifizierungscodes in Abhängigkeit von den empfangenen Daten und dem Verschlüsselungsschlüssel, der für den vorangehenden Schritt des Verschlüsselns dieser Daten genutzt wird, und
- Speichern (125) der verschlüsselten Daten in Verbindung mit dem Verschlüsselungsindex und dem Authentifizierungscode,

wobei der aktuelle Index periodisch aktualisiert wird, wobei die Aktualisierungsperiode (T) gleich der Gültigkeitsdauer eines Verschlüsselungsschlüssels ist, die Aktualisierung umfassend:

- ein Löschen und Ersetzen des Verschlüsselungsschlüssels, der dem aktuellen Index zugeordnet ist, mit einem neuen eindeutigen Verschlüsselungsschlüssel,
- ein kreisförmiges Inkrementieren des aktuellen Index.

6.  Server (401, 500) eines Datenverwaltungssystems (400), das eine zeitliche Steuerung der Zugriffe auf die Daten gestattet, wobei der Server eine indexierte Liste von Verschlüsselungsschlüsseln umfasst, wobei jeder Index einem eindeutigen Verschlüsselungsschlüssel zugeordnet ist, wobei jeder Verschlüsselungsschlüssel einer selben vorgegebenen Gültigkeitsdauer zugeordnet ist, wobei anfangs ein aktueller Index vorbestimmt wird, wobei der Server geeignet ist, die folgenden Schritte auszuführen:

- Empfangen (201) einer Anforderung von Zugriff auf Daten, die in dem Verwaltungssystem gespeichert sind, wobei die Daten verschlüsselt und in Verbindung mit einem Verschlüsselungsindex und einem ersten Authentifizierungscode gespeichert werden,
- Abrufen (205), in Abhängigkeit vom Verschlüsselungsindex, des Verschlüsselungsschlüssels aus der Liste von Verschlüsselungsschlüsseln, der diesem Verschlüsselungsindex zugeordnet ist,
- Entschlüsseln (210) der verschlüsselten Daten mittels des zuvor bestimmten Verschlüsselungsschlüssels,

- Bestimmen (215) eines zweiten Authentifizierungscodes in Abhängigkeit von den entschlüsselten Daten und dem Verschlüsselungsschlüssel, der für den vorangehenden Schritt genutzt wird,
- wenn der erste Authentifizierungscode gleich dem zweiten Authentifizierungscode ist, Senden (225) der entschlüsselten Daten in Reaktion auf die Zugriffs anforderung,
- anderenfalls Senden (230) einer Nachricht, die eine Nichtverfügbarkeit der Daten angibt, in Reaktion auf die Zugriffsanforderung,

wobei der aktuelle Index periodisch aktualisiert wird, wobei die Aktualisierungsperiode (T) gleich der Gültigkeitsdauer eines Verschlüsselungsschlüssels ist, die Aktualisierung umfassend:

- ein Löschen und Ersetzen des Verschlüsselungsschlüssels, der dem aktuellen Index zugeordnet ist, mit einem neuen eindeutigen Verschlüsselungsschlüssel,
- ein kreisförmiges Inkrementieren des aktuellen Index.

7. Datenverwaltungssystem (400), das eine zeitliche Steuerung der Zugriffe auf die Daten gestattet, das Verwaltungssystem umfassend:

- einen Server (401, 500) nach den Ansprüchen 5 und/oder 6,
- mindestens eine elektronische Client-Vorrichtung (403), die es gestattet, zu speichernde Daten an den Server zu senden, wobei die Daten einer gewünschten Aufbewahrungsfrist zugeordnet sind, und/oder
- mindestens eine elektronische Client-Vorrichtung (403), die es gestattet, eine Anforderung von Zugriff auf Daten, die im Datenverwaltungssystem gespeichert sind, zu senden.

8. Computerprogramm, **dadurch gekennzeichnet, dass** es Anweisungen umfasst, um durch einen Prozessor eines Servers (401, 500) eines Datenverwaltungssystems (400) ein Verfahren (100) zur Speicherung von Daten für eine zeitliche Steuerung eines Zugriffs auf die Daten des Datenverwaltungssystems nach einem der Ansprüche 1 bis 2 umzusetzen, wenn das Computerprogramm von dem Prozessor ausgeführt wird.

9. Speichermedium, das von einem Server (401, 500) eines Datenverwaltungssystems (400) gelesen werden kann, auf dem das Computerprogramm nach dem vorhergehenden Anspruch gespeichert ist.

10. Computerprogramm, **dadurch gekennzeichnet, dass** es Anweisungen umfasst, um durch einen Prozessor eines Servers (401, 500) eines Datenverwaltungssystems (400) ein Verfahren (200) zum Zugriff, mit zeitlicher Steuerung, auf Daten des Datenverwaltungssystems nach einem der Ansprüche 3 bis 4 umzusetzen, wenn das Computerprogramm von dem Prozessor ausgeführt wird.

11. Speichermedium, das von einem Server (401, 500) eines Datenverwaltungssystems (400) gelesen werden kann, auf dem das Computerprogramm nach dem vorhergehenden Anspruch gespeichert ist.

**Claims**

1. Data storage method (100) for temporal control of access to data of a data management system (400) comprising a server (401, 500), the method being executed by the server, the server comprising an indexed list of encryption keys, each index being associated with a unique encryption key, each encryption key being associated with one and the same predefined validity period, an index referred to as the current index being initially predetermined, the method comprising the following steps:

- receiving (101) a message comprising data to be stored in the data management system, as well as information concerning a desired retention period for this data,
- determining (105) an encryption index, depending on the desired retention period, on the validity period of an encryption key, on the current index and on the size of the indexed list of encryption keys,
- encrypting (115) the received data by means of the encryption key associated with the encryption index,
- determining (120), depending on the received data and on the encryption key used for the preceding step of encrypting this data, an authentication code, and
- storing (125) said encrypted data in association with the encryption index and the authentication code,

the current index being periodically updated, the update period (T) being the same as the validity period of an encryption key, the update comprising:

- deleting and replacing the encryption key associated with the current index with a new unique encryption key,
- circularly incrementing the current index.

2. Method according to the preceding claim, the message comprising the data to be stored additionally comprising information referred to as proprietary information, the method comprising a step prior to the encryption step:

- determining (110) a new encryption key depending on the encryption key associated with the encryption index and on the information referred to as proprietary information, and:

- the received data being encrypted (115) by means of the new encryption key,
- the authentication code being determined (120) depending on the received data and on the new encryption key, and
- the encrypted data in association with the encryption index and the authentication code being stored (125) furthermore in association with the information referred to as proprietary information.

3. Method (200) for accessing data of a data management system (400) allowing temporal control of access to the data, the management system comprising a server (401, 500), the method being executed by the server, the server comprising an indexed list of encryption keys, each index being associated with a unique encryption key, each encryption key being associated with one and the same predefined validity period, an index referred to as the current index being initially predetermined, the method comprising the following steps:

- receiving (201) a request for access to data stored in the management system, the data being stored in encrypted form and in association with an encryption index and a first authentication code,
- retrieving (205), depending on the encryption index, the encryption key associated with this encryption index from the list of encryption keys,
- decrypting (210) the encrypted data by means of the previously determined encryption key,
- determining (215), depending on the decrypted data and on the encryption key used for the preceding step, a second authentication code,
- if the first authentication code is the same as the second authentication code, then sending (225) the decrypted data in response to the access request,
- otherwise, sending (230) a message indicating the unavailability of the data in response to the access request,

the current index being periodically updated, the update period (T) being the same as the validity period of an encryption key, the update comprising:

- deleting and replacing the encryption key associated with the current index with a new unique encryption key,
- circularly incrementing the current index.

4. Method according to the preceding claim, the data being stored furthermore in association with information referred to as proprietary information, the method comprising a step prior to the decryption step:

- determining (205) a new encryption key depending on the encryption key associated with the encryption index and on the information referred to as proprietary information, and:

- the received data being decrypted (210) by means of the new encryption key,
- the second authentication code being determined (215) depending on the decrypted data and on the new encryption key.

5. Server (401, 500) of a data management system (400) allowing temporal control of access to the data, the server comprising an indexed list of encryption keys, each index being associated with a unique encryption key, each encryption key being associated with one and the same predefined validity period, an index referred to as the current index being initially predetermined, the server being designed to execute the following steps:

- receiving (101) a message comprising data to be stored in the data management system, as well as information concerning a desired retention period for this data,
- determining (105) an encryption index, depending on the desired retention period, on the validity period of an encryption key, on a current index and on the size of the indexed list of encryption keys,
- encrypting (115) the received data by means of the encryption key associated with the encryption index,
- determining (120), depending on the received data and on the encryption key used for the preceding step of encrypting this data, an authentication code, and
- storing (125) said encrypted data in association with the encryption index and the authentication code,

the current index being periodically updated, the update period (T) being the same as the validity period of an encryption key, the update comprising:

- deleting and replacing the encryption key associated with the current index with a new unique encryption key,
- circularly incrementing the current index.

6. Server (401, 500) of a data management system (400) allowing temporal control of access to the data, the server comprising an indexed list of encryption keys, each index being associated with a unique encryption key, each encryption key being associated with one and the same predefined validity period, an index referred to as the current index being initially predetermined, the server being designed to execute the following steps:

- receiving (201) a request for access to data stored in the management system, the data being stored in encrypted form and in association with an encryption index and a first authentication code,
- retrieving (205), depending on the encryption index, the encryption key associated with this encryption index from the list of encryption keys,
- decrypting (210) the encrypted data by means of the previously determined encryption key,
- determining (215), depending on the decrypted data and on the encryption key used for the preceding step, a second authentication code,
- if the first authentication code is the same as the second authentication code, then sending (225) the decrypted data in response to the access request,
- otherwise, sending (230) a message indicating the unavailability of the data in response to the access request,

the current index being periodically updated, the update period (T) being the same as the validity period of an encryption key, the update comprising:

- deleting and replacing the encryption key associated with the current index with a new unique encryption key,
- circularly incrementing the current index.

7. Data management system (400) allowing temporal control of access to the data, the management system comprising:

- a server (401, 500) according to Claim 5 and/or 6,
- at least one electronic device (403) referred to as a client allowing data to be stored to be sent to said server, the data being associated with a desired retention period, and/or
- at least one electronic device (403) referred to as a client allowing a request for access to data stored in the management system to be sent.

8. Computer program, **characterized in that** it comprises instructions for the implementation, by a processor of a server (401, 500) of a data management system (400), of a data storage method (100) for temporal control of access to the data of the data management system according to either of Claims 1 and 2, when the computer program is executed by the processor.

9. Storage medium, which can be read by a server (401, 500) of a data management system (400), on which the computer program according to the preceding claim is stored.

10. Computer program, **characterized in that** it comprises instructions for the implementation, by a processor of a server (401, 500) of a data management system (400), of a method (200) for accessing, with temporal control, data of the data management system according to either of Claims 3 and 4, when the computer program is executed by the processor.

11. Storage medium, which can be read by a server (401, 500) of a data management system (400), on which the computer program according to the preceding claim is stored.

100

RECEVOIR
DONNEES A
CHIFFRER → 101

DETERMINER
INDEX → 105

DETERMINER CLEF
CHIFFREMENT → 110

CHIFFRER DONNEES → 115

DETERMINER CODE
AUTHENTIFICATION → 120

ENREGISTRER
DONNEES → 125

**Fig. 1**

200

REQUETE ACCES
DONNEES → 201

RETROUVER CLEF
CHIFFREMENT
SELON INDEX → 205

DECHIFFRER
DONNES → 210

DETERMINER CODE
AUTHENTIFICATION → 215

VERIFIER
CODE
AUTHENTIFI
-CATION → 220

230 — KO

MESSAGE ERREUR

OK — RESTITUER
DONNEES → 225

**Fig. 2**

Index courant
(t0)  ⇨

| INDEX | CLEF |
|-------|--------|
| 1 | Clef 1 |
| 2 | Clef 2 |
| 3 | Clef 3 |
| .... | ... |
| N | Clef N |

**Fig. 3A**

Index courant
(t0 + T)  ⇨

| INDEX | CLEF |
|-------|--------|
| 1 | Clef N+1 |
| 2 | Clef 2 |
| 3 | Clef 3 |
| .... | ... |
| N | Clef N |

**Fig. 3B**

Index courant
(t0 + 2T)  ⇨

| INDEX | CLEF |
|-------|--------|
| 1 | Clef N+1 |
| 2 | Clef N+2 |
| 3 | Clef 3 |
| .... | ... |
| N | Clef N |

**Fig. 3C**

**Fig. 4**

**Fig. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017206372 A1

- WO 2017131788 A1